# FASCICULE DE BREVET EUROPEEN

(11) **EP 1 801 070 B1**
(45) Date de publication et mention de la délivrance du brevet: **12.11.2008**
(21) Numéro de dépôt: 05300962.7
(22) Date de dépôt: 24.11.2005
(51) Int. Cl.: C01B 13/02, B01D 53/32, B01D 53/22

(54) **Procédé de production d'oxygène, à partir d'air, en particulier au moyen d'une cellule électrochimique avec membrane céramique, avec des moyens de contrôle permettant une production continue**
Verfahren zur Herstellung von Sauerstoff aus Luft, insbesondere mittels einer elektrochemischen Zelle mit keramischer Membrane und mit einer Steuereinrichtung zur kontinuierlichen Herstellung von Sauerstoff
Process for the production of oxygen from air, in particular by means of an electrochemical cell with a ceramic membrane and with controlling means allowing a continuous oxygen production

(43) Date de publication de la demande: 27.06.2007
(73) Titulaire: L'AIR LIQUIDE, Société Anonyme pour l'Etude et l'Exploitation des Procédés Georges Claude, 75007 Paris (FR)
(72) Inventeur: Del Gallo, Pascal, 91410 Dourdan (FR); Gouriou, Guylaine, 78280 Guyancourt (FR)
(74) Mandataire: Conan, Philippe Claude

(56) Documents cités:
- EP-A- 0 948 989
- US-A- 4 519 813
- US-A- 5 855 762
- US-A1- 2004 042 944
- US-A1- 2005 016 865
- US-B1- 6 352 624
- US-B1- 6 368 491

## Description

La présente invention concerne la production d'oxygène ou d'un gaz enrichi en oxygène, sous pression, à partir d'air ou de tout autre gaz pauvre en oxygène, par la mise en oeuvre d'un générateur électrochimique du type membrane céramique conductrice ionique.

De tels générateurs sont aujourd'hui bien connus, et comprennent de manière générale une ou plusieurs cellules électrochimiques de génération d'oxygène, comprenant chacune une ou plusieurs membranes céramiques. Dans un tel générateur, chaque membrane céramique est portée, par chauffage extérieur ou intégré, à température élevée, et est constituée d'une cathode (dépôt ou support) d'une anode (dépôt ou support) et d'un électrolyte solide (membrane céramique autosupportée ou supporté sur l'anode ou la cathode). Une telle membrane, quelle que soit sa forme, est alimentée en air du côté de la cathode. La molécule d'oxygène se dissocie au niveau de la cathode (dépôt ou support poreux), l'ion anionique (02-) diffuse au travers de l'électrolyte solide et se recombine en oxygène moléculaire au niveau du dépôt ou du support poreux anodique. Au total, en introduisant de l'air atmosphérique à l'entrée d'un tel générateur, on génère de l'oxygène pur, voire de très haute pureté (qualité N60, pureté supérieure à 99,9999%, et éventuellement sous pression.

De tels générateurs ont été décrits par exemple dans les documents WO 02/058830, WO 01/07149 et WO 02/058829, auxquels on se réfèrera utilement en tant que de besoin. Par exemple, la membrane céramique est un électrolyte solide ayant la formule : (M_{α}O_{β})₁₋ₓ(R_{y}O_{δ})ₓ
dans laquelle M représente au moins un atome trivalent ou tétravalent choisi parmi Bi, Ce, Zr, Ga, Th ou Hf, α et β sont tels que la structure M_{α}O_{β} est électriquement neutre, R représente au moins un atome divalent ou trivalent choisi parmi Mg, Ca, Ba, Sr, Gd, Sc, Yb, Y, Sm ou La, y et δ sont tels que la structure R_{y}O_{δ} est électriquement neutre, et x est compris entre 0,05 et 0,40, et plus particulièrement entre 0,06 et 0,20. Deux familles d'électrolyte solide sont classiquement employées : la zircone stabilisée à l'oxyde d'yttrium (ZrO₂-Y₂O₃, 5-15%wtY₂O3), la cérine dopée à l'oxyde de gadolinium (CeO₂-Gd₂O₃, tel que Ce_{1,8}Gd_{0,2}O_{2-δ}).

Par exemple, chaque électrode, à savoir anode et cathode est un matériau de formule : M₁M₂O₃
dans laquelle M₁ représente un ou plusieurs atomes choisis parmi La, Ce, Pr, Nd, Pm, Sm, Eu, Gd, Tb, Dy, Ho, Er, Tm, Yb, Lu, Y, Mg, Ca, Sr ou Ba, M₂ représente un ou plusieurs atomes choisis parmi Sc, Ti, V, Cr, Mn, Fe, Co, Ni, Cu ou Zn.

La famille classiquement employée en qualité d'électrode de type M₁M₂O₃ est de structure pérovskite. Des matériaux tels que La₁₋ₓSrₓMnO_{3-δ}, La₁₋ₓSrₓFe_{y}Co_{1-y}O_{3-δ}, ... peuvent être citées en exemple de matériaux anodiques et cathodiques.

Mais la présente invention, telle qu'exposée et décrite ci-après, n'est pas limitée au type de générateur précédemment identifié.

La présente invention s'intéresse plus particulièrement à la production d'oxygène ultra pur sous pression (1 à 50 bars), en particulier avec un générateur tel que précédemment défini, avec une flexibilité de pression et/ou de débit pour l'utilisateur.

Conformément au document US 6 368 491, on a décrit un générateur à membrane céramique comportant n cellules, montées en parallèle. En fonction de la demande en oxygène, de 1 à n cellules sont mises en service. Un système de contrôle, ou contrôleur, permet de commander ou diriger le générateur, par contrôle tout ou rien de chaque cellule. Aucun système de régulation en pression de l'oxygène produit n'est décrit.

Conformément au document US 6 352 624, on a décrit un générateur à membrane céramique produisant de l'oxygène sous pression pouvant atteindre 138 bars, auquel est adjoint une capacité de stockage, l'ensemble étant piloté ou commandé par un système de contrôle, ou contrôleur, permettant de déterminer le nombre de cellules électrochimiques nécessaires pour atteindre le débit fixé en oxygène. Le système de contrôle ne permet pas de réguler la pression de sortie de l'oxygène, laquelle est fournie directement par la ou les cellules électrochimiques mises en oeuvre.

Conformément au document US 5 855 762, on a décrit une méthode de contrôle d'un générateur à membrane céramique, selon laquelle le courant électrique fourni auxdites membranes dépend d'un signal indiquant la quantité d'oxygène produit par le générateur et par le niveau d'une capacité de stockage de l'oxygène produit. Selon cette solution, aucun moyen ne permet de contrôler la pression de sortie.

Conformément au document US 2004/042944, on a décrit un procédé de production d'oxygène utilisant un générateur à membrane céramique produisant de l'oxygène auquel est adjoint une capacité de stockage. L'ensemble est piloté par un système de contrôle, qui permet de déterminer le nombre de cellules électrochimiques nécessaires pour atteindre le débit demandé en oxygène.

La présente invention a pour objet, grâce à un système de contrôle approprié, de pouvoir adapter la production d'oxygène à toute demande ponctuelle importante, en termes de débit et/ou de pression, pouvant dépasser dans certains cas les débits et/ou pressions générés par le générateur proprement dit.

Autrement dit, à partir d'un générateur fonctionnant en continu dans des conditions nominales (pression P1, débit D1), la présente invention a pour objet des moyens de contrôle permettant de produire pendant un temps t de l'oxygène à une pression P2 supérieure à P1, ou pendant un temps t' de l'oxygène avec un débit D2 supérieur à D1, éventuellement avec une pression P2 supérieure à P1.

Selon le procédé de l'invention, le générateur fonctionne en continu, et on dispose, d'une part de plusieurs capacités tampon de stockage de l'oxygène généré par le générateur, disposées en parallèle, communiquant à leur entrée avec la sortie du générateur, et à leur sortie avec une utilisation consommant l'oxygène produit, et d'autre part d'un système de contrôle permettant au moins d'adapter le débit et/ou la pression de l'oxygène produit, à la demande en débit et/ou pression de l'utilisation.

Ce système de contrôle comprend au moins un module de contrôle des deux capacités tampon, assurant au moins les fonctions suivantes :
(a) le stockage dans l'une des capacités tampon, dite nominale, d'une réserve nominale d'oxygène permettant le maintien, pendant une durée nominale, d'une pression de sortie en oxygène dite nominale, et/ou d'un débit de sortie en oxygène dit nominal,
(b) le stockage dans l'autre des capacités tampon, dite de pointe, d'une réserve de pointe d'oxygène, supérieure ou égale en quantité à la réserve nominale, permettant le maintien, pendant une durée de pointe, d'une pression en oxygène dite de pointe, supérieure ou égale à la pression dite nominale, et/ou d'un débit de sortie dit de pointe, supérieur ou égal au débit nominal,
(c) selon la pression en oxygène demandée, supérieure ou égale à la pression nominale, et inférieure ou égale à la pression de pointe, et/ou selon le débit en oxygène demandé, supérieur ou égal au débit nominal, et inférieur ou égal au débit de pointe, un soutirage en sortie de la capacité nominale et/ou de la capacité de pointe
(d) le pilotage du générateur pour générer et réalimenter en continu, en oxygène, la capacité nominale et/ou la capacité de pointe.

La présente invention est maintenant décrite par référence au dessin annexé, dans lequel :
- la figure 1 représente de manière schématique une installation complète de production d'oxygène, fonctionnant selon un procédé, en particulier de contrôle, selon l'invention,
- la figure 2 représente de manière schématique une cellule électrochimique appartenant à un générateur compris dans l'installation représentée à la figure 1,
- la figure 3 représente plus particulièrement une membrane céramique appartenant à une cellule électrochimique telle que représentée à la figure 2, et ce de manière schématique.

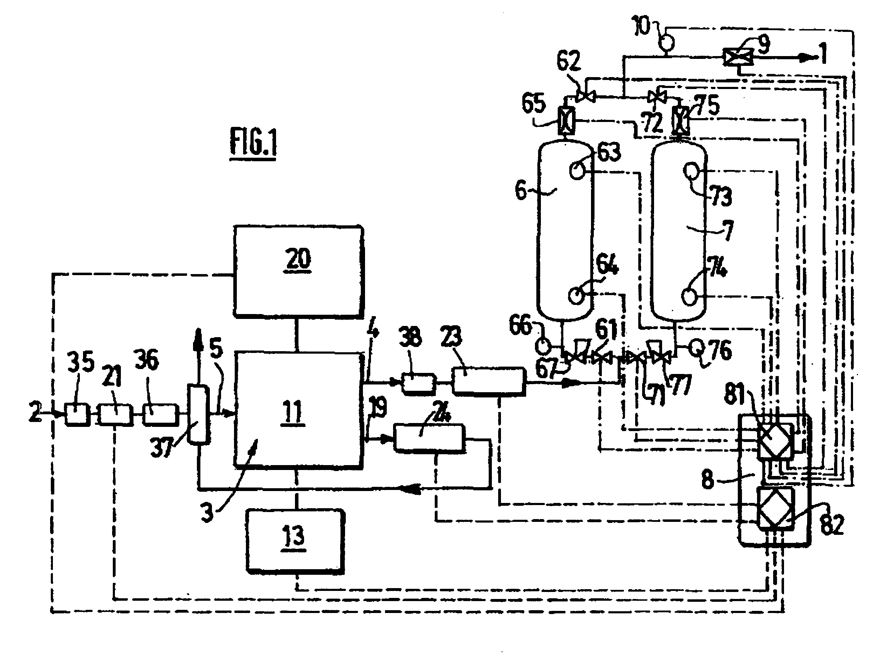

Conformément à la figure 1, une installation selon la présente invention comporte essentiellement :
- un générateur 3, générant à sa sortie 4 de l'oxygène, à partir d'air introduit à son entrée 5 ; ainsi que différents autres composants ou circuits décrits ci-après, associés à ce générateur,
- deux capacités tampon 6 et 7 de stockage de l'oxygène généré par le générateur, disposées en parallèle, communiquant chacune à leur entrée avec la sortie 4 du générateur 3, et chacune à leur sortie avec une utilisation (9, 10) consommant l'oxygène produit 1,
- et un système 8 de contrôle, ou contrôleur, permettant de manière générale, au moins d'adapter le débit et/ou la pression de l'oxygène produit, à la demande en débit 9 et/ou pression 10 de l'utilisation ; ce système 8 de contrôle comprend au moins un module 81 de contrôle des deux capacités tampon 6 et 7, ainsi qu'un module 82 de contrôle du générateur 3, piloté par le module de contrôle 81 des deux capacités tampon 6 et 7.

Au total, avec l'installation selon figure 1, on produit, en continu, de l'oxygène 1, ou un gaz enrichi en oxygène, sous pression, à partir d'air 2 introduit dans l'installation.

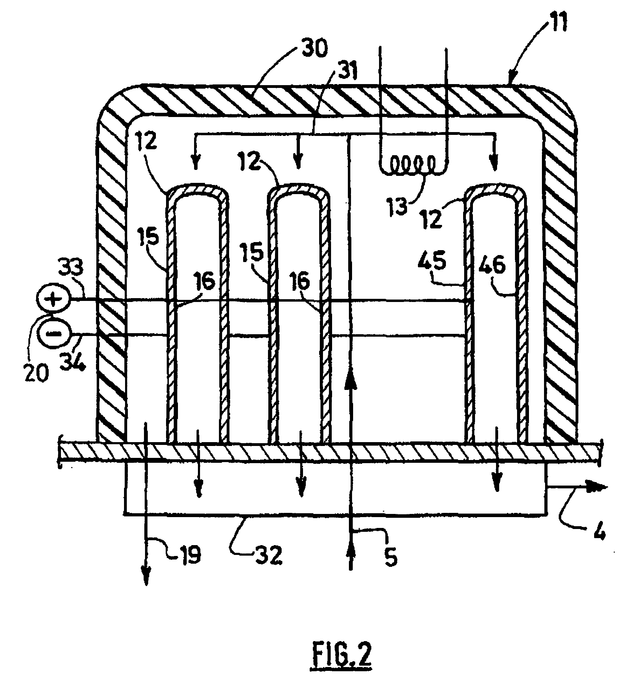

Comme montré par les figures 1 et 2, le générateur 3 est du type membrane céramique et comprend une ou plusieurs cellules électrochimiques 11 de génération d'oxygène. Chaque cellule électrochimique 11 comprend une ou plusieurs membranes céramiques 12, ayant chacune la forme d'un tube fermé à une extrémité, disposées chacune entre une cathode 15 et une anode 16. En fonctionnement, c'est-à-dire à haute température, une source électrique 20 permet de faire passer un courant électrique, contrôlé en tension et/ou intensité, entre les cathodes 15 et anodes 16. Les raccords électriques pour chaque tube vont de l'anode interne 16 (borne positive pour un générateur électrochimique) vers la cathode externe 15 (borne négative pour un générateur électrochimique) du tube suivant, etc ; le générateur est relié à un connecteur de sortie 34 au premier tube par la cathode externe et à un connecteur de sortie 33 au dernier tube par l'anode interne. L'ensemble des membranes céramiques 12 de forme tubulaire est disposé dans un four 30 chauffé à l'intérieur par tout moyen 13 approprié, tel qu'une résistance électrique. L'intérieur du four est alimenté en air 5 par un distributeur 31 à l'extérieur des différentes membranes céramiques 12 dans l'enceinte du four. L'air est préchauffé dans ou en dehors du four. L'oxygène produit est soutiré de l'intérieur des différentes membranes céramiques 12, pour être collecté par un collecteur 32 et être évacué en 4. L'air appauvri en oxygène, constituant un rejet 19, est évacué de l'intérieur du four 11. Moyennant quoi, chaque membrane céramique 12 est alimentée en air 5 du côté de la cathode 15, et évacué 4 en oxygène du côté de l'anode 16.

Le générateur 3 peut comporter plusieurs cellules électrochimiques 11, ou montées en série, comme montré par la figure 2, et alors alimentées par une seule et même source de courant électrique 20, ou montées en parallèle, comme non représenté, et alimentées respectivement par plusieurs sources de courant électrique individuelles.

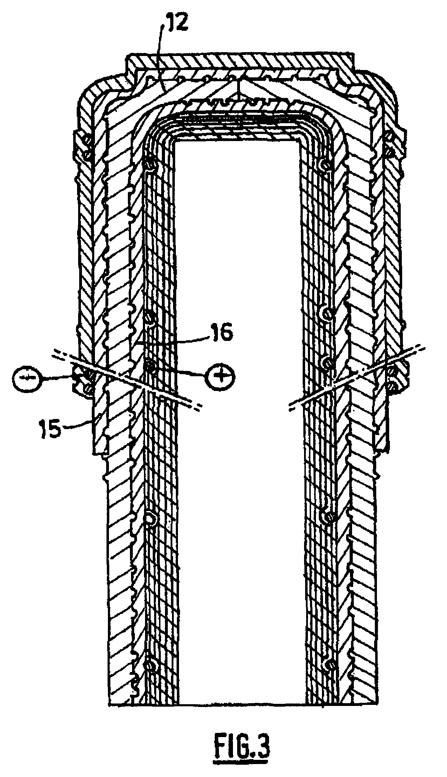

La figure 3 représente, à échelle agrandie, de manière schématique, et en coupe axiale, une membrane céramique 12 appartenant à une cellule électrochimique 11 telle que décrite précédemment, mise en forme selon un tube à extrémité supérieure fermée, et équipée de sa cathode 15 et de son anode 16, avec des fils de contact et collecte électrique appropriés.

Comme montré par la figure 1, entre l'entrée d'air 2 et l'entrée 5 du générateur 3 sont disposés successivement :
- un ventilateur 35,
- un moyen 21 de contrôle ou régulation du débit massique d'air
- un filtre 36
- et un échangeur de chaleur 37 avec le rejet 19.

A la sortie du générateur 3 sont disposés :
- sur le circuit de sortie 4 de l'oxygène produit, vers les capacités tampon 6 et 7, un filtre 38, et un moyen 23 de détection de la pression aux concentrations en oxygène,
- et sur la sortie du rejet 19, vers l'échangeur 37, un moyen 24 de détection de la pression partielle ou concentration en oxygène.

Les deux capacités tampon 6 et 7 de stockage de l'oxygène généré 4 dans le générateur 3, sont disposées en parallèle, et communiquent chacune à leur entrée avec la sortie 4 du générateur 3, et à leur sortie avec une utilisation 1 consommant l'oxygène produit, et caractérisée, d'une part par un moyen de contrôle 9 du débit massique, et d'autre part par un moyen de contrôle 10 de la pression de l'oxygène produit, lesdits moyens étant commandés par l'utilisateur.

Plus particulièrement, chaque capacité tampon 6 ou 7 fonctionne en mode "tout ou rien", moyennant quoi toute variation du débit de sortie d'une dite capacité se traduit par une variation de pression dans la capacité. A cette fin, chaque capacité tampon 6 ou 7 est appareillée ou équipée avec :
- deux vannes, l'une d'entrée (61, 71) et l'autre de sortie (62, 72), commandées par le module de contrôle 81,
- deux pressostats (63, 64 ; 73,74) encadrant la pression dans la capacité, l'un (63, 73) de seuil haut, et l'autre (64, 74) de seuil bas, reliés au module de contrôle 81,
- un régulateur (65, 75) de débit massique à la sortie de la capacité, commandé par le module de contrôle 81,
- un capteur (66, 76) de pression à la sortie de ladite capacité, relié au module de contrôle 81,
- et un déverseur (67, 77) à l'entrée de la capacité, pour sa réalimentation.

Le module 81 de contrôle des deux capacités tampon 6 et 7 assure, au moyen d'un système d'exploitation et d'une programmation appropriés, les fonctions suivantes :
(a) le stockage dans l'une 6 des capacités tampon, dite capacité nominale 6, d'une réserve nominale d'oxygène permettant le maintien, pendant une durée nominale, d'une pression de sortie en oxygène dite nominale, à savoir P1, et/ou d'un débit de sortie dit nominal, à savoir D1,
(b) le stockage dans l'autre des capacités tampon, dite capacité de pointe 7, d'une réserve de pointe d'oxygène, supérieure ou égale en quantité à la réserve nominale de la capacité 6, permettant le maintien, pendant une durée de pointe, d'une pression de sortie en oxygène, dite de pointe, à savoir P2, supérieure ou égale à la pression dite nominale, à savoir P1, et/ou d'un débit de sortie dit de pointe, à savoir D2, supérieur ou égal au débit nominal, à savoir D1,
(c) selon la pression en oxygène demandée, à savoir P, fixée ou affichée sur le capteur 10, laquelle est supérieure ou égale à la pression nominale P1, et inférieure ou égale à la pression de pointe P2, et/ou selon le débit en oxygène demandé, affiché ou fixé sur le régulateur de débit 9, lequel est supérieur ou égal au débit nominal D1, et inférieur ou égal au débit de pointe D2, un soutirage en sortie de la capacité nominale 6 et/ou de la capacité de pointe 7,
(d) le pilotage du générateur 3, au moyen du module de contrôle 82, associé au module 81, pour générer et réalimenter en continu, en oxygène, la capacité nominale 6 et/ou la capacité de pointe 7.

Quant à lui, le module 81 de contrôle du générateur 3 commande, sous la dépendance du module 82, au moins l'un des paramètres opératoires suivants :
- le débit massique d'air alimentant la ou les membranes céramiques 12, au moyen du régulateur de débit 21,
- le courant électrique 20 circulant entre les anodes 16 et cathodes 15, et ce en tension et/ou intensité,
- la température de chauffage de la ou des membranes céramiques 12, et ce grâce au moyen de chauffage 13.

Le module de contrôle 82 du générateur 3 commande ce dernier également en fonction de la concentration en oxygène, en aval de l'anode 16, grâce à l'analyseur 23, et/ou de la concentration en oxygène du rejet 19, en aval de l'anode 16, mesurée par l'analyseur 24.

Grâce au moyen de contrôle défini précédemment, du générateur 3 en relation avec les capacités tampon 6 et 7, on peut obtenir une pureté de l'oxygène produit 1, supérieure à 99 %, et/ou avec une pression comprise entre 1 et 50 bars.

Selon un agencement préféré, le module de contrôle 82 du générateur 3 contrôle au moins l'un des paramètres suivants de défaut du générateur 3, à savoir :
- le débit d'alimentation en air, contrôlé par le régulateur 21,
- la puissance électrique de la source 20, délivrée entre anode 16 et cathode 15,
- le chauffage, par les moyens 13, de la membrane céramique 12,
- la pression d'oxygène du côté de la cathode 15,
- la pureté de l'oxygène du côté de l'anode 16.

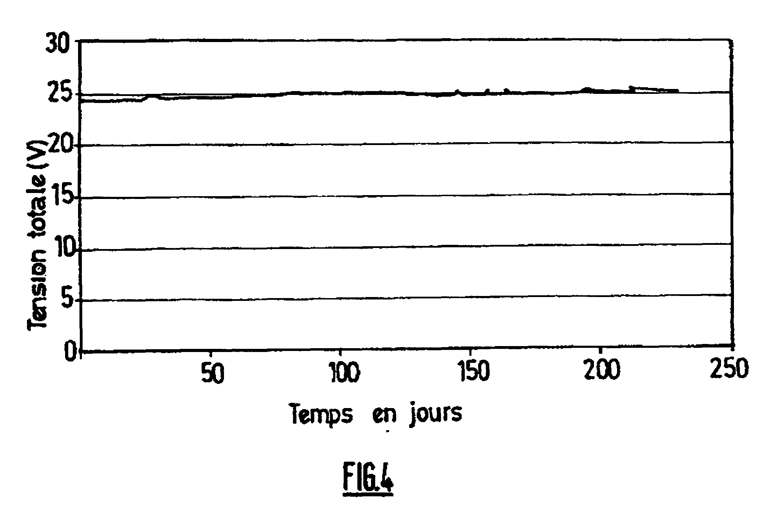

Les performances d'un procédé de production d'oxygène selon l'invention peuvent être illustrées par référence aux graphes des figures 4 à 7, en choisissant comme paramètre opératoire, et donc comme variable contrôlée, l'intensité du courant électrique 20 circulant entre l'anode 16 et la cathode 15 du générateur 3.

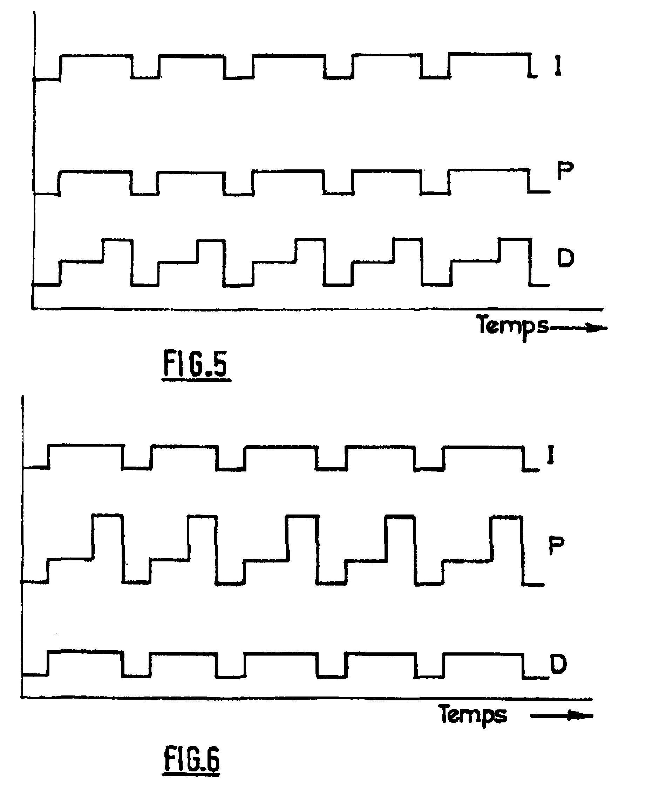

Conformément à la figure 4, des essais ont été réalisés sur plus de 7 mois, en produisant un débit de 1 Nl/mn, sous une pression de 10 bars, avec une pureté de 99,9999 %. Selon la figure 5, on observe une stabilité de la tension, sur au moins 250 jours, avec une dégradation de moins de 1 % du débit.

Conformément aux figures 5, 6 et 7, les lettres D, P et I identifient respectivement le débit d'oxygène produit, la pression d'oxygène produit, et l'intensité du courant circulant entre cathode 15 et anode 16.

Avec les mêmes conventions que précédemment, les figures 5 à 7 illustrent les différents modes de fonctionnement permis avec un procédé selon l'invention.

Sur la figure 5 l'utilisateur travaille en consommation nominale à un débit D1 et à une pression P1. Il a besoin, pendant un temps t, d'une consommation de pointe à un débit D supérieur à D1, mais à une pression P égale à la pression P1. La production d'oxygène à pression P2, égale à P1, et à débit D2 supérieur à D1, préalablement contenu en réserve dans la capacité de pointe 7 vient alors en complément de la production d'oxygène de la capacité nominale 6.

Un autre exemple des flexibilités du procédé selon l'invention est représenté figure 6.

L'utilisateur a cette fois un besoin, pendant un temps t', d'une pression P supérieure à P1, mais à un débit D égal à D1. La production d'oxygène provient alors uniquement de la réserve de pointe 7, la consommation de pointe ayant été préalablement définie.

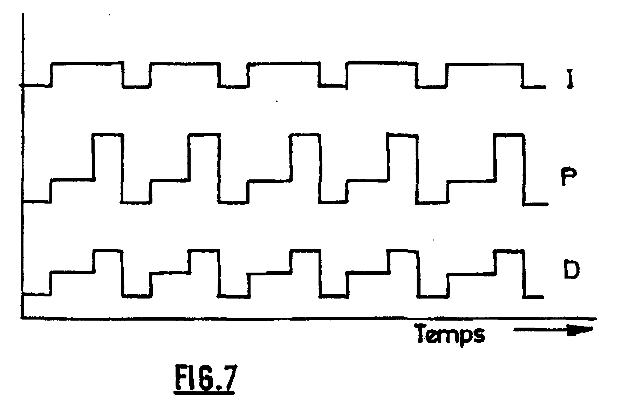

Selon la figure 7, l'utilisateur consomme ponctuellement un débit D bien supérieur à D1, et à une pression P bien supérieure à P1 ; la capacité de pointe 7 est alors mise en oeuvre.

## Revendications

1. Procédé de production d'oxygène (1) ou d'un gaz enrichi en oxygène, sous pression, à partir d'air (2), ou d'un gaz pauvre en oxygène, selon lequel, à cette fin, on dispose d'un générateur (3) générant à sa sortie (4) de l'oxygène, à partir d'air introduit à son entrée (5), **caractérisé en ce que**, le générateur fonctionnant en continu, on dispose :
- d'au moins deux capacités tampon (6,7) de stockage de l'oxygène généré par le générateur, disposées en parallèle, communiquant à leur entrée avec la sortie du générateur, et à leur sortie avec une utilisation consommant l'oxygène produit,
- et d'un système (8) de contrôle permettant au moins d'adapter le débit et/ou la pression de l'oxygène produit, à la demande en débit (9) et/ou pression (10) de l'utilisation,
ledit système de contrôle (8) comprenant au moins un module (81) de contrôle des deux capacités tampon (6, 7), assurant les fonctions suivantes :
(a) le stockage dans l'une (6) des capacités tampon, dite nominale, d'une réserve nominale d'oxygène permettant le maintien, pendant une durée nominale, d'une pression de sortie en oxygène dite nominale, et/ou d'un débit de sortie dit nominal,
(b) le stockage dans l'autre (7) des capacités tampon, dite de pointe, d'une réserve de pointe d'oxygène, supérieure ou égale en quantité à la réserve nominale, permettant le maintien, pendant une durée de pointe, d'une pression en oxygène dite de pointe, supérieure ou égale à la pression dite nominale, et/ou d'un débit de sortie dit de pointe, supérieur ou égal au débit nominal,
(c) selon la pression (10) en oxygène demandée, supérieure ou égale à la pression nominale, et inférieure ou égale à la pression de pointe, et/ou selon le débit (9) en oxygène demandé, supérieur ou égal au débit nominal, et inférieur ou égal au débit de pointe, un soutirage en sortie de la capacité nominale (6) et/ou de la capacité de pointe (7),
(d) le pilotage (82) du générateur (3) pour générer et réalimenter en continu en oxygène la capacité nominale (6) et/ou la capacité de pointe (7).

2. Procédé selon la revendication 1, **caractérisé en ce que** chaque capacité tampon (6, 7) fonctionne en mode "tout ou rien", moyennant quoi toute variation du débit de sortie de ladite capacité se traduit par une variation de pression dans ladite capacité.

3. Procédé selon la revendication 2, **caractérisé en ce que** chaque capacité (6, 7) tampon est appareillée avec :
- deux vannes, l'une d'entrée (61, 71) et l'autre de sortie (71, 72), commandées par le module de contrôle (81)
- deux pressostats (63, 64 ; 73, 74) encadrant la pression dans la capacité, l'un (63, 73) de seuil haut, et l'autre (64, 74) de seuil bas, reliés au module de contrôle (81)
- un régulateur (65, 75) de débit massique à la sortie de ladite capacité, commandé par le module de contrôle (81)
- un capteur (66, 76) de pression à la sortie de ladite capacité, relié au module de contrôle (81)
- et un déverseur (67, 77) à l'entrée de ladite capacité, pour sa réalimentation.

4. Procédé selon la revendication 1, **caractérisé en ce que** le système de contrôle (8) comprend un module de contrôle (82) du générateur (3), piloté par le module de contrôle (81) des deux capacités tampon (6, 7).

5. Procédé selon la revendication 1, dans lequel le générateur (3) comprend au moins une cellule électrochimique (11) de génération d'oxygène, comprenant au moins une membrane céramique (12), portée par chauffage (13) à température élevée, disposée entre une cathode (15) et une anode (16), alimentée en air du côté de la cathode, et évacuée (4) en oxygène du côté de l'anode, et le module (82) de contrôle du générateur piloté par le module de contrôle (81) des capacités tampon (6, 7) commande au moins l'un des paramètres opératoires suivants :
- le débit massique d'air alimentant (21) la membrane céramique (12)
- le courant électrique (20) circulant entre l'anode (16) et la cathode (15), en tension et/ou intensité
- la température de chauffage (13) de la membrane céramique (12).

6. Procédé selon la revendication 5, **caractérisé en ce que** le module de contrôle (82) du générateur commande ce dernier également en fonction de la concentration (23) en oxygène, en aval de l'anode (16), et/ou de la concentration (24) en oxygène du rejet (19), en aval de l'anode.

7. Procédé selon la revendication 5, **caractérisé en ce que** le module de contrôle (82) du générateur (3) contrôle au moins l'un des paramètres suivants de défaut du générateur, à savoir :
- le débit (21) d'alimentation en air
- la puissance électrique (20) délivrée entre anode et cathode
- le chauffage (13) de la membrane céramique (12)
- la pression d'oxygène du côté de l'anode (16)
- la pureté de l'oxygène du côté de l'anode (16).

8. Procédé selon la revendication 5, **caractérisé en ce que** le générateur comporte plusieurs cellules électrochimiques (11), ou montées en série, et alors alimentées par une seule et même source de courant électrique, ou montées en parallèle, et alimentées respectivement par plusieurs sources de courant électrique.

9. Procédé selon l'une quelconque des revendications 1 à 8, **caractérisé en ce que** le contrôle du générateur (3), en relation avec celui des capacités tampon (6, 7), est réglé pour obtenir une pureté d'oxygène produit supérieure à 99 %.

10. Procédé selon l'une quelconque des revendications 1 à 8, **caractérisé en ce que** le contrôle du générateur (3), en relation avec celui des capacités tampon (6, 7), est réglé pour obtenir une pression d'oxygène produit, comprise entre 1 et 50 bars.

## Claims

1. Method for producing oxygen (1) or an oxygen-enriched gas, under pressure, from air (2), or from an oxygen-lean gas, in which, for this purpose, a generator (3) is used which generates, at its outlet (4), oxygen from air introduced at its inlet (5), **characterized in that**, the operating continuously generator makes use of:
- at least two buffer tanks (6, 7) for storing the oxygen generated by the generator, which are placed in parallel, communicating at their inlet with the generator outlet, and at their outlet with an application consuming the oxygen produced,
- and a control system (8) for at least adjusting the flow rate and/or the pressure of the oxygen produced to the demand in flow rate (9) and/or pressure (10) of the application,
the said control system (8) comprising at least one module (81) for controlling the two buffer tanks (6, 7), performing the following functions:
(a) the storage in one (6) of the buffer tanks, called nominal tank, of a nominal oxygen reserve for maintaining, for a nominal period, an oxygen outlet pressure, called nominal pressure, and/or an outlet flow rate, called nominal flow rate,
(b) the storage in the other (7) buffer tank, called peak tank, of an oxygen peak reserve, greater than or equal to the nominal reserve in terms of quantity, for maintaining, for a peak period, an oxygen pressure called peak pressure, which is higher than or equal to the pressure called nominal pressure, and/or an outlet flow rate, called peak flow rate, which is higher than or equal to the nominal flow rate,
(c) according to the oxygen pressure (10) demanded, which is higher than or equal to the nominal pressure and lower than or equal to the peak pressure, and/or according to the oxygen flow rate (9) demanded, which is higher than or equal to the nominal flow rate and lower than or equal to the peak flow rate, a withdrawal at the outlet of the nominal tank (6) and/or of the peak tank (7),
(d) the control (82) of the generator (3) for generating and resupplying oxygen continuously to the nominal tank (6) and/or the peak tank (7).

2. Method according to Claim 1, **characterized in that** each buffer tank (6, 7) operates in "on/off" mode, whereby any variation in the outlet flow rate of the said tank results in a pressure variation in the said tank.

3. Method according to Claim 2, **characterized in that** each buffer tank (6, 7) is equipped with:
- two valves, an inlet valve (61, 71) and the other an outlet valve (71, 72), controlled by the control module (81),
- two pressure controllers (63, 64; 73, 74) encompassing the pressure in the tank, one (63, 73) of high threshold and the other (64, 74) of low threshold, these being connected to the control module (81),
- a mass flow controller (65, 75) at the outlet of the said tank, controlled by the control module (81),
- a pressure sensor (66, 76) at the outlet of the said tank, connected to the control module (81),
- and an overflow (67, 77) at the inlet of the said tank, for its resupply.

4. Method according to Claim 1,
**characterized in that** the control system (8) comprises a generator (3) control module (82) controlled by the control module (81) for controlling the two buffer tanks (6, 7).

5. Method according to Claim 1, in which the generator (3) comprises at least one electrochemical cell (11) for generating oxygen, comprising at least one ceramic membrane (12) heated (13) to high temperature, placed between a cathode (15) and an anode (16), fed with air from the cathode side, and drained of oxygen (4) on the anode side, and the generator control module (82) controlled by the control module (81) for controlling the buffer tanks (6, 7) controls at least one of the following operating parameters:
- the mass flow rate of air feeding (21) the ceramic membrane (12),
- the electric current (20) flowing between the anode (16) and the cathode (15), in terms of voltage and/or in intensity,
- the heating temperature (13) of the ceramic membrane (12).

6. Method according to Claim 5, **characterized in that** the generator control module (82) also controls the generator according to the oxygen concentration (23) downstream of the anode (16) and/or the oxygen concentration (24) of the discharge (19), downstream of the anode.

7. Method according to Claim 5, **characterized in that** the generator (3) control module (82) controls at least one of the following default parameters of the generator, namely:
- the air-feed flow rate (21),
- the electric power (20) delivered between
- anode and cathode,
the heating (13) of the ceramic membrane (12),
- the oxygen pressure on the anode side (16),
- the oxygen purity on the anode side (16).

8. Method according to Claim 5, **characterized in that** the generator comprises a plurality of electrochemical cells (11), either connected in series, and accordingly supplied by one and the same electric power source, or connected in parallel, and supplied respectively by a plurality of electric power sources.

9. Method according to any one of Claims 1 to 8, **characterized in that** the control of the generator (3), in relation to that of the buffer tanks (6, 7), is adjusted to obtain an oxygen product of greater than 99% purity.

10. Method according to any one of Claims 1 to 8, **characterized in that** the control of the generator (3), in relation to that of the buffer tanks (6, 7) is adjusted to obtain an oxygen product pressure of between 1 and 50 bar.

## Patentansprüche

1. Verfahren zur Herstellung von Sauerstoff (1) oder eines mit Sauerstoff angereicherten Gases unter Druck, ausgehend von Luft (2), oder eines sauerstoffarmen Gases, gemäß dem man dazu einen Generator (3) anordnet, der an seinem Ausgang (4) Sauerstoff ausgehend von der Luft erzeugt, die an seinem Eingang (5) eingelassen wird, **dadurch gekennzeichnet, dass** der Generator kontinuierlich funktioniert und man:
- über mindestens zwei Pufferbehälter (6, 7) zum Lagern des von dem Generator erzeugten Sauerstoffs verfügt, die parallel angeordnet sind, die an ihrem Eingang mit dem Ausgang des Generators und an ihrem Ausgang mit einer Anwendung kommunizieren, die den erzeugten Sauerstoff verbraucht,
- über ein System (8) zum Steuern verfügt, das es erlaubt, zumindest den Durchsatz und/oder den Druck des erzeugten Sauerstoffs an die Durchsatzanfrage (9) und/oder den Anwendungsdruck (10) anzupassen,
wobei das Steuersystem (8) mindestens ein Steuermodul (81) der zwei Pufferbehälter (6, 7) aufweist, das die folgenden Funktionen erfüllt:
(a) Lagern in einem (6) der Pufferbehälter, Nennbehälter genannt, eines Sauerstoffnennvorrats, der während einer Nenndauer das Aufrechterhalten eines so genannten Sauerstoff-Nennausgangsdrucks und/oder eines so genannten Nennausgangsdurchsatzes erlaubt,
(b) Lagern in dem anderen (7) der Pufferbehälter, Spitzenbehälter genannt, eines Sauerstoffspitzenvorrats, der in der Menge größer oder gleich dem Nennvorrat ist, der während einer Spitzendauer das Aufrechterhalten eines so genannten Sauerstoffspitzendrucks erlaubt, der größer oder gleich dem so genannten Nenndruck ist, und/oder eines so genannten Spitzenausgangsdurchsatzes, der größer oder gleich dem Nenndurchsatz ist,
(c) je nach dem verlangten Sauerstoffdruck (10), der größer oder gleich dem Nenndruck und kleiner oder gleich dem Spitzendruck ist, und/oder je nach dem verlangten Sauerstoffdurchsatz (9), der größer oder gleich dem Nenndurchsatz und kleiner oder gleich dem Spitzendurchsatz ist, ein Abzapfen am Ausgang des Nennbehälters (6) und/oder des Spitzenbehälters (7),
(d) das Steuern (82) des Generators (3), um kontinuierlich Sauerstoff zu erzeugen und den Nennbehälter (6) und/oder den Spitzenbehälter (7) damit zu versorgen.

2. Verfahren nach Anspruch 1, **dadurch gekennzeichnet, dass** jeder Pufferbehälter (6, 7) im "Ein-Aus-Modus" funktioniert, so dass jede Variation des Ausgangsdurchsatzes des Behälters zu einer Druckvariation in dem Behälter führt.

3. Verfahren nach Anspruch 2, **dadurch gekennzeichnet, dass** jeder Pufferbehälter (6, 7) mit Folgendem ausgestattet ist:
- zwei Ventilen, nämlich ein Eingangsventil (61, 71) und ein Ausgangsventil (71, 72), die von dem Steuermodul (81) gesteuert werden,
- zwei Druckreglern (63, 64; 73, 74), die den Druck in dem Behälter steuern, der eine (63, 73) den oberen Schwellenwert und der andere (64, 74) den unteren Schwellenwert, die mit dem Steuermodul (81) verbunden sind,
- einem Massedurchsatzregler (65, 75) am Ausgang des Behälters, der von dem Steuermodul (81) gesteuert wird,
- einem Drucksensor (66, 76) am Ausgang des Behälters, der mit dem Steuermodul (81) verbunden ist,
- und einem Ableiter (67, 77) am Eingang des Behälters zu dessen Neuversorgen.

4. Verfahren nach Anspruch 1, **dadurch gekennzeichnet, dass** das Steuersystem (8) ein Steuermodul (82) des Generator (3) aufweist, das von dem Steuermodul (81) der zwei Speicherbehälter (6, 7) gesteuert wird.

5. Verfahren nach Anspruch 1, bei dem der Generator (3) mindestens eine elektrochemische Zelle (11) zum Erzeugen von Sauerstoff aufweist, die mindestens eine keramische Membran (12) aufweist, die durch Heizen (13) auf hohe Temperatur gebracht wird, die zwischen einer Kathode (15) und einer Anode (16) angeordnet ist, die auf der Kathodenseite mit Luft versorgt wird, und auf der Anodenseite Sauerstoff ableitet (4), und wobei das Steuermodul (82) des Generators, das von dem Steuermodul (81) der Speicherbehälter (6, 7) gesteuert wird, mindestens einen der folgenden Betriebsparameter steuert:
- den Luftmassedurchsatz (21), der die keramische Membran (12) versorgt,
- den elektrischen Strom (20), der zwischen der Anode (16) und der Kathode (15) zirkuliert, hinsichtlich seiner Spannung und/oder Stärke,
- die Aufheiztemperatur (13) der keramischen Membran (12).

6. Verfahren nach Anspruch 5, **dadurch gekennzeichnet, dass** das Steuermodul (82) des Generators diesen Letzteren auch in Abhängigkeit von der Sauerstoffkonzentration (23) stromabwärts der Anode (16) und/oder der Sauerstoffkonzentration (24) der Ableitung (19) stromabwärts der Anode steuert.

7. Verfahren nach Anspruch 5, **dadurch gekennzeichnet, dass** das Steuermodul (82) des Generators (3) mindestens einen der folgenden Fehlerparameter des Generators steuert, nämlich:
- den Luftversorgungsdurchsatz (21)
- die elektrische Leistung (20), die zwischen Anode und Kathode geliefert wird
- das Heizen (13) der keramischen Membran (12)
- den Sauerstoffdruck auf der Seite der Anode (16)
- die Reinheit des Sauerstoffs auf der Seite der Anode (16).

8. Verfahren nach Anspruch 5, **dadurch gekennzeichnet, dass** der Generator mehrere elektrochemische Zellen (11) aufweist, die entweder in Serie montiert sind und daher von einer einzigen gleichen Stromquelle versorgt werden, oder parallel geschaltet sind und jeweils von mehreren Stromquellen versorgt werden.

9. Verfahren nach einem der Ansprüche 1 bis 8, **dadurch gekennzeichnet, dass** die Steuerung des Generators (3) in Zusammenhang mit der der Speicherbehälter (6, 7) reguliert ist, um eine Reinheit des erzeugten Sauerstoffs zu erzielen, die größer ist als 99 %.

10. Verfahren nach einem der Ansprüche 1 bis 8, **dadurch gekennzeichnet, dass** die Steuerung des Generators (3) in Zusammenhang mit der der Speicherbehälter (6, 7) reguliert ist, um einen Druck des erzeugten Sauerstoffs zu erzielen, der zwischen 1 und 50 bar liegt.
